# EUROPEAN PATENT APPLICATION

(11) **EP 1 187 432 A1**
(43) Date of publication of application: **13.03.2002**
(21) Application number: 00307891.2
(22) Date of filing: 12.09.2000
(51) Int. Cl.: H04M 1/2745

(54) **Memory management for a communication device**

(71) Applicant: Telefonaktiebolaget L M Ericsson (Publ), 126 25 Stockholm (SE)
(72) Inventor: Björn, Michael, 211 49 Malmö (SE)
(74) Representative: O'Connell, David Christopher

(57) **Abstract**

There is disclosed a device having a data storage and communications function, wherein, when a user enters a data item for storage, and the storage of said item would cause the size of a list of stored items to approach a predetermined maximum size, the function presents a stored item to the user for flagging. The invention is described with particular reference to a mobile phone having a phone book function, where the phone book can contain only a limited number of entries.

## Description

This invention relates to a communications device, and in particular to a device such as a mobile phone or other mobile communications device, which a user can use to communicate with another person.

### BACKGROUND OF THE INVENTION

In use of a mobile communications device, such as a mobile phone, a call is initiated by dialling the number of the called party. Advantageously, the mobile phone includes a phone book function, which allows a user to store numbers, so that they can be accessed and dialled automatically, without requiring the user to remember the numbers.

Such numbers can be stored in an internal memory of the mobile communications device. Further, mobile phones which operate in the GSM system also have Subscriber Identity Module (SIM) cards, which can also be used to store information of this type.

However, the storage capacity which is available is limited. That is, the list of numbers which can be stored in the phone book has a predetermined maximum size.

GB-2322511 discloses a mobile phone with a phone book database. When the phone book database is full, and the user attempts to store another phone number, that number is first stored in an intermediate memory. The phone controller suggests to the user that the new number can be inserted into the memory, overwriting an already stored number. Specifically, the controller suggests the number which corresponds to the first name on an alphabetical list of names associated with the stored numbers, as a candidate for overwriting. The user has the option to accept the suggestion, to select another stored number for overwriting, or not to store the newly entered number.

However, this has the disadvantage that the number which is presented to the user as a candidate for overwriting may be an important number, and it is relatively inconvenient to select a different number as an alternative candidate for overwriting. Moreover, in any event, one of the numbers, either the newly entered number or one of the already stored numbers, is lost.

US-5,568,546 discloses a telephone apparatus which also has a stored list of telephone numbers for speed dialling. When a new number is added to the list, such that the list would exceed its maximum permitted size, a number is deleted from the list. Specifically, the frequency of use of the stored numbers is monitored, and the number which is deleted is the number which has been least frequently used, or the oldest of the least frequently used stored numbers, if there is more than one. Again, however, this has the disadvantage that one of the stored numbers is automatically deleted, and it may be the case that this is an important number for the user, even though it is not used frequently.

### SUMMARY OF THE INVENTION

According to a first aspect of the present invention, there is provided a mobile communications device having a phone book function, wherein, when a user enters a number for storage, and the storage of said number would cause the size of a list of stored numbers to approach a predetermined maximum size, the function presents a stored number to the user for flagging and subsequent backup.

In a preferred embodiment of the present invention, flagged stored numbers are automatically backed up when the device is connected to a second device having additional storage.

This has the advantage that numbers do not simply need to be deleted, since there is an opportunity to backup excess numbers to the device with additional storage.

According to a second aspect of the present invention, there is provided a mobile communications device having a phone book function wherein, when a user enters a number for storage in a list of numbers, which would cause the list of numbers to exceed a maximum permitted size, the function suggests a stored number to be overwritten by the entered number, characterised in that the stored number suggested for overwriting is selected on the basis of its past use history.

Preferably, the stored number suggested for overwriting is selected on the basis that it has infrequently been used.

This has the advantage that the user is given the option of choosing which number is to be overwritten while also ensuring that, in the most common case, where an infrequently used number can safely be overwritten, the system can be used easily.

According to another aspect of the invention, there is provided a device having a data storage and communications function, wherein, when a user enters a data item for storage, and the storage of said item would cause the size of a list of stored items to approach a predetermined maximum size, the function presents a stored item to the user for flagging.

### BRIEF DESCRIPTION OF DRAWINGS

Figure 1 is a block schematic diagram of the relevant components of a mobile communications device in accordance with the present invention.
Figure 2 is a flow chart showing the operation of a method in accordance with the present invention.

### DETAILED DESCRIPTION OF PREFERRED EMBODIMENTS

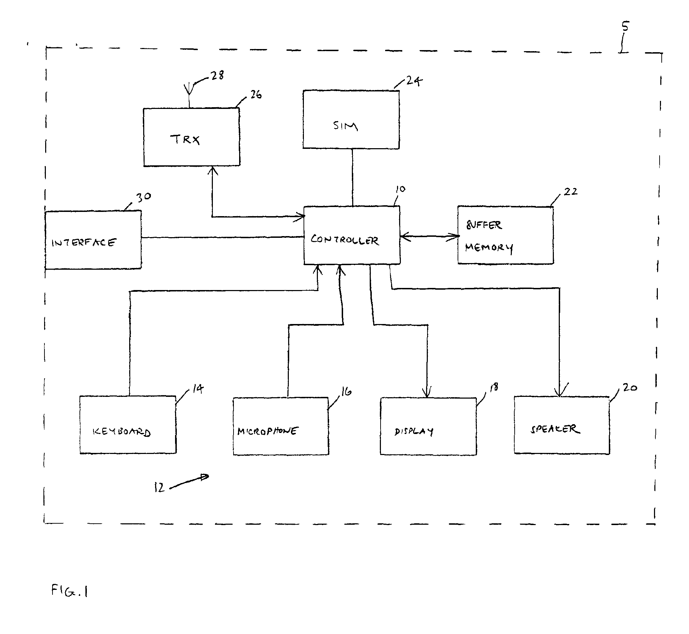

Figure 1 is a block schematic diagram of a mobile phone, which is a typical example of a mobile communications device in which the present invention can be implemented. However, the invention can apply to equipment such as a mobile radio terminal, including devices such as mobile telephones, pagers, communicators, electronic organisers, or smartphones, personal digital assistants (PDAs), or indeed to any portable or non-portable communication apparatus.

The hardware components of the device are generally conventional, with the invention preferably being implemented in the software which controls the operation and interaction of the components, as will be described in more detail below.

Figure 1 shows the phone 5, having a controller 10, which runs the software which controls the functions of the phone.

As is conventional the phone has a man-machine interface (MMI) 12, which includes a keyboard 14, microphone 16, display 18 and speaker 20.

In the following description, it will be assumed that information is primarily input by the user by means of the keyboard 14, and that information is presented to the user primarily by means of the display 18. However, it will be appreciated that voice control, in which the user inputs information by means of the microphone 16, and synthesised speech feedback to the user through the speaker 20 can also be used.

The phone 5 also includes a buffer memory 22, in which data input by the user are temporarily stored, and a memory 24, in this case in the form of a removable Subscriber Identity Module (SIM) card, for storing data.

The controller 10 is also connected to transceiver circuitry (TRX) 26, which in turn is connected to an antenna 28 for transmitting and receiving signals over a wireless communication network.

The controller 10 further includes an interface 30 for connection to another local hardware device, which may be an accessory or a remote computer, for example.

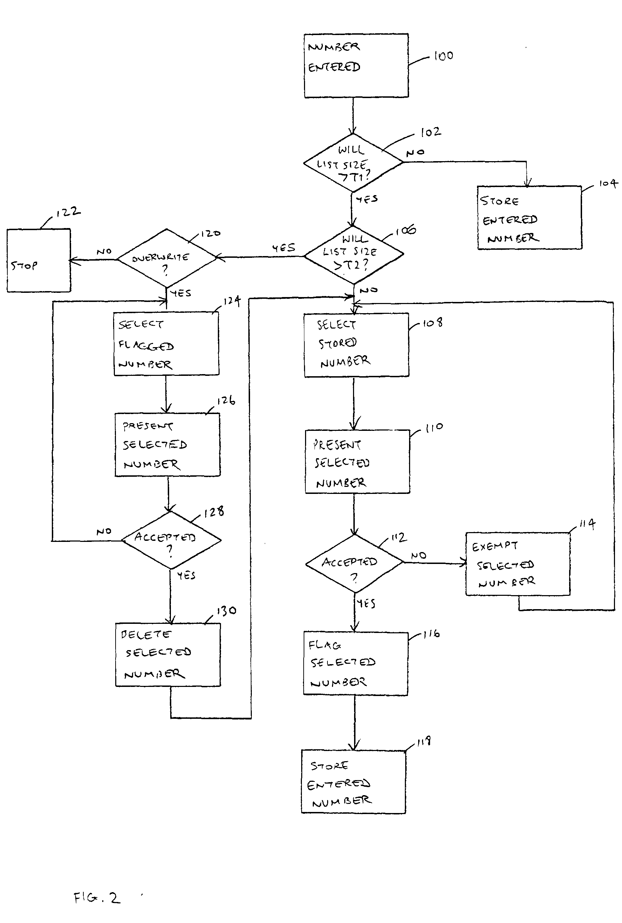

Figure 2 is a flow chart illustrating the operation of the device of Figure 1. More specifically, Figure 2 shows the operation of the phone book function of the device when the user enters a new number, together with a corresponding user identification. As is conventional, this option may be selected by the user from a menu of functions, by means of the keypad 14, responding to prompts provided on the display 18. However, it will also be appreciated that other input methods can be used.

The procedure starts at step 100, in which the user enters a number which he wishes to store.

Firstly, at step 102, the controller 10 tests whether, if this number is stored, the size of the list of stored numbers, present on the SIM card 24, will exceed a first threshold T1. The value T1 of the first threshold is set with reference to the maximum permitted list size, which is in turn determined by the available storage capacity on the SIM card 24. For example, if the maximum permitted list size is 100 items, the threshold T1 may be set to a value of 90 items.

If, in step 102, it is determined that storing the newly entered number will not cause the size of the list to exceed the first threshold, the procedure passes to step 104, and the number is stored in the conventional way.

If, however, it is determined in step 102 that, after storing the new number, the list size would exceed the first threshold, the procedure passes to step 106. In step 106, it is determined whether, if the newly number were to be stored, the size of the list would exceed a second threshold T2. The second threshold value is set to the maximum list size. Thus, if it is determined that storing the newly entered number would not cause the list size to exceed the maximum permitted list size, the procedure passes to step 108.

In this event, although there is space to store the newly entered number, the list size is approaching its predetermined maximum value, and steps are taken to warn the user of this.

Firstly, in step 108 one of the already stored numbers is selected. In this illustrated embodiment of the invention, the controller selects a stored number which the user has rarely used.

In step 110, the user is presented with a warning that the list of stored numbers is approaching the maximum permitted size, and is presented with the selected rarely used number identified in step 108.

The aim of the function at this stage is to identify those stored numbers which are of less importance for the user, so that they can be cleared from the phone book, thus ensuring that, if the phone book reaches its capacity, it will contain only numbers which are of importance to the user.
In the preferred embodiment of the invention, numbers which are of less importance to the user are flagged in the phone book list. At the first available opportunity, flagged numbers are then transferred to a backup list. Advantageously, the flagged numbers are transferred automatically when the phone is next connected via the interface 30 to an appropriate device having storage capability, although such transfer may also or alternatively require user confirmation or initiation. For example, the phone 5 can be connected to a personal digital assistant (PDA) or to a computer, and the connection can either be wired, or wireless, for example using the Bluetooth Protocol.
Alternatively, an accessory, for example a memory device, containing additional storage, such as a memory card, can be connected to the interface 30. A further alternative is that the backup list can be stored centrally, in the wireless network in which the phone 5 is used, in which case it can be transferred over the wireless network when the phone 5 next establishes a connection thereto.

The user is asked whether the number presented in step 110 is one which he wishes to have flagged. If the user replies at step 112 that he does not wish this number to be flagged, the procedure passes to step 114, in which case the presented number is identified as such in the list of stored numbers, such that it is not presented for flagging again. For example, the user may have stored numbers which, although used rarely, are important numbers which he wishes to ensure remain stored.

After step 114 the procedure returns to step 108, and a further number is selected.

If at step 112 it is determined that the user can accept the selected number, the procedure passes to step 116, in which a flag is added, in the list of stored numbers, to the number selected in step 108.

Finally, in step 118, the number entered by the user in step 100 is stored on the SIM card 24.

Although, as discussed above, the method provides a way of removing stored numbers to a backup file, which should ensure the list does not exceed its maximum permitted size, it is nevertheless possible that this maximum size could be exceeded, if the phone has no opportunity to store the backup list in a separate device as discussed above.

In that event, it can be determined in step 106 that storing the newly entered number would cause the maximum permitted size to be exceeded. In that event, the procedure passes to step 120, in which the user is warned of this condition, and is asked whether he wishes to store the newly entered number, by overwriting an already stored number. If the user replies that he does not wish to overwrite an already stored number, the procedure passes to step 122 and stops.

If, however, it is determined in step 120 that the user does wish to overwrite an already stored number, a suitable number for overwriting must be selected. In this case, it is apparent that the most logical candidates for overwriting are the numbers which have already been flagged for transfer to the backup file.

Thus, the procedure passes to step 124, in which one of the flagged numbers is selected. Again, this selection can be on the basis that the most rarely used flagged number is selected.

Next, in step 126, the user is warned that a number must be overwritten, and is asked whether the selected flagged number can be deleted. If it is determined in step 128 that it cannot, the procedure returns to step 124, and an alternative flagged number is selected.

If it is determined in step 128 that the selected flagged number can be deleted, then this is done in step 130. Thereafter, the procedure passes to step 108, and the succeeding steps, in which one of the already stored unflagged numbers is flagged, and the newly entered number is stored.

This therefore has the advantage that the user is warned that the phone book list is approaching the maximum size, and there is an opportunity to transfer some items from the list to a backup device, thereby minimising the possibility will have to be deleted.

Further, if numbers are to be deleted, or are to be flagged such that they are transferred to a remote device, the user is presented with a logically selected option for that number, while having the opportunity to make a different choice if he wishes.

Although the invention is described herein with reference to a mobile phone, it will be appreciated that it is applicable to any communications device having a phonebook function, or similar, which has a finite capacity. Further, although the invention is described herein with reference to stored phone numbers, it will be appreciated that it is applicable to other stored information. The invention is particularly applicable to lists of stored communication data, such as internet e-mail addresses, Wireless Application Protocol (WAP) addresses, phone numbers with images of the corresponding phone users, etc. However, the invention is generally applicable to any data which are stored on a memory device with limited capacity. For example, the stored data can be image files, sound files, web pages or thumbnail sketches of web pages, icons etc. With any of these stored data items, the user can be given an opportunity to select an item for flagging when the storage capacity of the memory device is approached, so that the item can be transferred to an alternative storage device, for example with larger capacity. Further, an item can be proposed for deletion when the storage capacity of the memory device is reached, the item being selected on the basis that it has been used infrequently. The invention may therefore be implemented on any device which allows storage and communication of such data items either on internal memory or on a memory device connected thereto.

There is therefore provided a generally applicable system for maintaining lists of stored data.

## Claims

1. A communications device, having a memory for storing a list of items of data, the device being controlled such that, when a user inputs a new item of data for storage:
if storage of the new item would cause the list to exceed a first predetermined size, a previously stored item is presented to the user, and,
if the previously stored item is accepted by the user, it is flagged.

2. A communications device as claimed in claim 1, wherein the previously stored item is selected from the list for presentation to the user on the basis that it has previously been infrequently used.

3. A communications device as claimed in claim 1 or 2, wherein, if the previously stored item is not accepted by the user, it is not subsequently represented to the user.

4. A communications device as claimed in claim 1, 2 or 3, comprising means for detecting when an alternative storage device when available, and for transferring flagged items in said list to the alternative storage device when available.

5. A communications device as claimed in claim 4, wherein flagged items in said list are automatically transferred to the alternative storage device when available.

6. A communications device as claimed in claim 4 or 5, wherein the alternative storage device is a personal digital assistant or a computer.

7. A communications device as claimed in claim 4 or 5, wherein the alternative storage device is in an accessory connected to the communications device.

8. A communications device as claimed in claim 4, 5 or 6, wherein the flagged items are transferred over a wired connection.

9. A communications device as claimed in claim 4, 5 or 6, wherein the flagged items are transferred over a wireless connection.

10. A communications device as claimed in any preceding claim, wherein the communications device is a mobile communications device, and the memory is an internal memory of the device.

11. A communications device as claimed in any of claims 1 to 9, wherein the communications device is a mobile phone, and the memory is a SIM card.

12. A communications device as claimed in any of claims 1 to 9, wherein the communications device is a personal digital assistant.

13. A communications device as claimed in any preceding claim, wherein the items of data are communications data.

14. A communications device as claimed in claim 13, wherein the communications device is a mobile phone, and the communications data are phone numbers.

15. A communications device as claimed in any preceding claim, wherein:
if storage of the new item would cause the list to exceed a second predetermined size greater than the first predetermined size, a flagged item is presented to the user, and,
if the presented flagged item is accepted by the user, it is deleted from the list.

16. A communications device, having a memory for storing a list of items of communication data, the device being controlled such that, when a user inputs a new item of communication data for storage:
if storage of the new item would cause the list to exceed a predetermined maximum size, a previously stored item is presented to the user for possible deletion, the previously stored item being selected on the basis that it has previously been infrequently used.

17. A method of controlling a communications device, having a memory for storing a list of items of data, the method comprising, when a user inputs a new item of data for storage:
if storage of the new item would cause the list to exceed a first predetermined size, presenting a previously stored item to the user, and,
if the previously stored item is accepted by the user, flagging said item.

18. A method as claimed in claim 17, comprising selecting the previously stored item from the list for presentation to the user on the basis that it has previously been infrequently used.

19. A method as claimed in claim 17 or 18, wherein, if the previously stored item is not accepted by the user, it is not subsequently represented to the user.

20. A method as claimed in claim 17, 18 or 19, comprising detecting when an alternative storage device is available, and transferring flagged items in said list to the alternative storage device when available.

21. A method as claimed in claim 20, comprising automatically transferring flagged items in said list to the alternative storage device when available.

22. A method as claimed in claim 20 or 21, comprising transferring the flagged items over a wired connection.

23. A method as claimed in claim 20 or 21, comprising transferring the flagged items over a wireless connection.

24. A method as claimed in claim 20 or 21, comprising transferring the flagged items to an accessory connected to the communications device.

25. A method as claimed in any of claims 17-23, wherein the communications device is a mobile communications device, and the memory is an internal memory of the device.

26. A method as claimed in any of claims 17-23, wherein the communications device is a mobile phone, and the memory is a SIM card.

27. A method as claimed in any of claims 17-26, wherein the communications device is a personal digital assistant.

28. A method as claimed in any of claims 17-26, wherein the items of data are communication data.

29. A method as claimed in claim 28, wherein the communications device is a mobile phone, and the items of communications data are phone numbers.

30. A method as claimed in any of claims 17-29, further comprising:
if storage of the new item would cause the list to exceed a second predetermined size greater than the first predetermined size, presenting a flagged item to the user, and,
if the presented flagged item is accepted by the user, deleting it from the list.

31. A method of controlling a communications device, having a memory for storing a list of items of communication data, the method comprising, when a user inputs a new item of communication data for storage:
if storage of the new item would cause the list to exceed a predetermined maximum size, selecting a previously stored item on the basis that it has previously been infrequently used, and presenting the selected previously stored item to the user for possible deletion.
